# EUROPÄISCHE PATENTSCHRIFT

(11) **EP 0 490 104 B1**
(45) Veröffentlichungstag und Bekanntmachung des Hinweises auf die Patenterteilung: **16.02.1994**
(21) Anmeldenummer: 91119305.0
(22) Anmeldetag: 13.11.1991
(51) Int. Cl.: F02B 27/02

(54) **Verfahren zur Steuerung der Luftzufuhr bei einer Brennkraftmaschine**
Method of controlling the air admission for an internal combustion engine
Procédé pour contrôler l'admission d'air pour moteur à combustion interne

(30) Priorität: 14.12.1990 DE 4039992
(43) Veröffentlichungstag der Anmeldung: 17.06.1992
(73) Patentinhaber: MERCEDES-BENZ AG, 70327 Stuttgart (DE)
(72) Erfinder: Scherenberg, Dieter, Dr.-Ing., W-7000 Stuttgart 75 (DE)

(56) Entgegenhaltungen:
- EP-A- 0 225 620
- WO-A-82/01742
- WO-A-89/03473
- PATENT ABSTRACTS OF JAPAN vol. 11, no. 301 (M-628)(2748) 30. September 1987 & JP-A-62 091 622
- PATENT ABSTRACTS OF JAPAN vol. 10, no. 47 (M-456)(2104) 25. Februar 1986 & JP-A-60 198 325
- PATENT ABSTRACTS OF JAPAN vol. 7, no. 193 (M-238)(1338) 24. August 1983 & JP-A-58 093 929
- MTZ Bd. 51, Nr. 4, 1990, STUTTGART Seiten 142 - 146; MILAN MICIK: 'Der Hochleistungsmotor für BMW M 5'

## Beschreibung

Die Erfindung bezieht sich auf ein Verfahren zur Steuerung der Luftzufuhr bei einer Brennkraftmaschine gemäß Oberbegriff des Patentanspruches 1.

Bei einer aus der "MTZ 51 (1990) 4, Seiten 142 - 146 (Bild 4)" bekannten Brennkraftmaschine ist vorgesehen, die Luft über zwei relativ lange Resonanzsaugrohre anzusaugen. Diese beiden Resonanzsaugrohre sind an einem Resonanzsammelbehälter angeschlossen, welcher über eine Klappe bedarfsweise in zwei Teilsammelvolumen unterteilbar ist, wobei das eine Resonanzsaugrohr an das eine und das andere Resonanzsaugrohr an das andere Teilsammelvolumen angeschlossen ist. Bis hin zu einer vorgegebenen Grenzdrehzahl ist diese Klappe geschlossen, wodurch durch Ausnützung von Resonanzeffekten ein verbesserter Liefergrad und somit eine Verbesserung des Drehmomentverlaufes in den unteren und mittleren Drehzahlbereichen erzielt werden kann. In den höheren Drehzahlbereichen wird diese Klappe geöffnet. Aufgrund der relativ langen Resonanzsaugrohre muß insbesondere im höheren Drehzahlbereich mit Leistungseinbußen gerechnet werden.

Aus der WO 82/01742 ist ferner ein Ansaugsystem bekannt, bei welchem durch entsprechende Schaltung zweier Ventile die vom Verdichter eines Abgasturboladers geförderte Frischluft entweder über zwei relativ lange Resonanzrohre und zwei Resonanzsammelbehälter oder auf direktem Wege (bei hohen Drehzahlen) über die beiden hintereinander geschalteten Resonanzsammelbehälter zur Brennkraftmaschine gelangt. Eine Unterteilung eines Resonanzsammelbehälters in mehrere Teilsammelvolumina ist nicht möglich. Darüber hinaus kommt es auch im hohen Drehzahlbereich zu einer gegenseitigen Beeinflussung der auf kurzem Wege angesaugten und der in diesem Drehzahlbereich auch noch teilweise über die langen Resonanzrohre angesaugten Luftströmungen, welche sich liefergradverschlechternd auswirkt.

Der Erfindung liegt die Aufgabe zugrunde, ein Verfahren der im Oberbegriff des Hauptanspruches beschriebenen Art aufzuzeigen, mit welchem ein erhöhter Drehmomentverlauf nicht nur im niederen und mittleren Drehzahlbereich, sondern auch im hohen Drehzahlbereich erzielbar ist.

Die Aufgabe wird erfindungsgemäß durch die Merkmale des Hauptanspruches gelöst.

Mit dem erfindungsgemäßen Verfahren wird genau ab dem Zeitpunkt, ab dem die beiden Teilsammelvolumen im Resonanzbehälter miteinander verbunden werden, also ab dem Zeitpunkt, ab dem keine Resonanzwirkung mehr gegeben ist, die Luft über ein sehr kurzes Saugrohr angesaugt. Die Reibungsverluste bzw. die Strömungsverluste beim Ansaugen der Frischluft werden damit deutlich reduziert, woraus ein verbesserter Liefergrad und dementsprechend eine erhöhter Momentenverlauf resultiert. Dabei wird dadurch, daß oberhalb der vorgegebenen Grenzdrehzahl die beiden langen Resonanzrohre verschlossen sind, bewirkt, daß ausschließlich über das kurze Saugrohr angesaugt wird, so daß also eine gegenseitige Beeinflussung von über die langen Resonanzsaugrohre in den Resonanzsammelbehälter und von über das kurze Saugrohr in den Resonanzsammelbehälter gelangenden Strömungen ausgeschlossen ist. Dies wirkt sich ebenso liefergradverbessernd und damit drehmomentsteigernd aus.
Eine Vorrichtung zur Durchführung des erfindungsgemäßen Verfahrens und vorteilhafte Ausgestaltungen hierzu sind weiteren Ansprüchen zu entnehmen.

In der Zeichnung ist die Erfindung anhand mehrerer Ausführungsbeispiele verdeutlicht.

Im einzelnen zeigt in Form von Prinzipdarstellungen
- Figur 1: ein Ausführungsbeispiel einer Vorrichtung zur Durchführung des erfindungsgemäßen Verfahrens,
- Figur 1a: eine Schnittdarstellung der Figur 1 entlang der Linie Ia-Ia
- Figur 1b: eine weitere vorteilhafte Lösung zur Steuerung des das Saugrohr 7 in Figur 1 passierenden Luftstromes,
- Figur 1c: eine weitere vorteilhafte Lösung zur Steuerung des das Saugrohr 7 in Figur 1 passierenden Luftstromes,
- Figur 2: in einem Diagramm M_{D}=f(n) den Zusammenhang zwischen dem Drehmomentverlauf bei einer konventionellen und einer mit dem erfindungsgemäßen Verfahren betriebenen Brennkraftmaschine
- Figur 3: ein weiteres Ausführungsbeispiel einer Vorrichtung zur Durchführung des erfindungsgemäßen Verfahrens,
- Figur 4: eine Schnittdarstellung der Figur 3 entlang der Linie IV-IV,
- Figur 5: ein weiteres Ausführungsbeispiel einer Vorrichtung zur Durchführung des erfindungsgemäßen Verfahrens und
- Figur 6: ein weiteres Ausführungsbeispiel einer Vorrichtung zur Durchführung des erfindungsgemäßen Verfahrens.

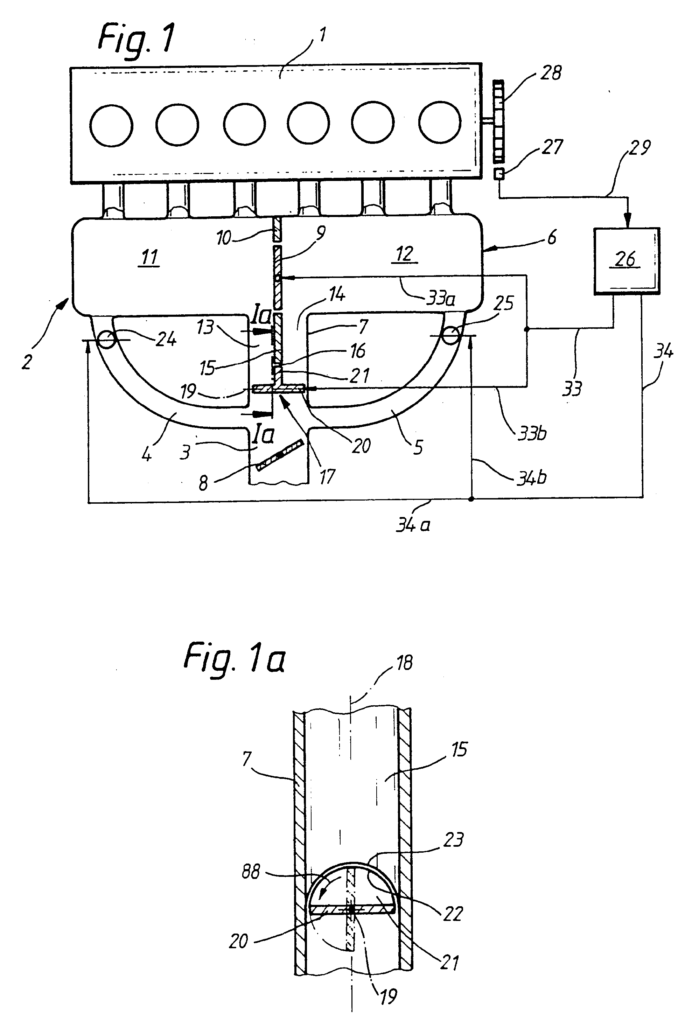

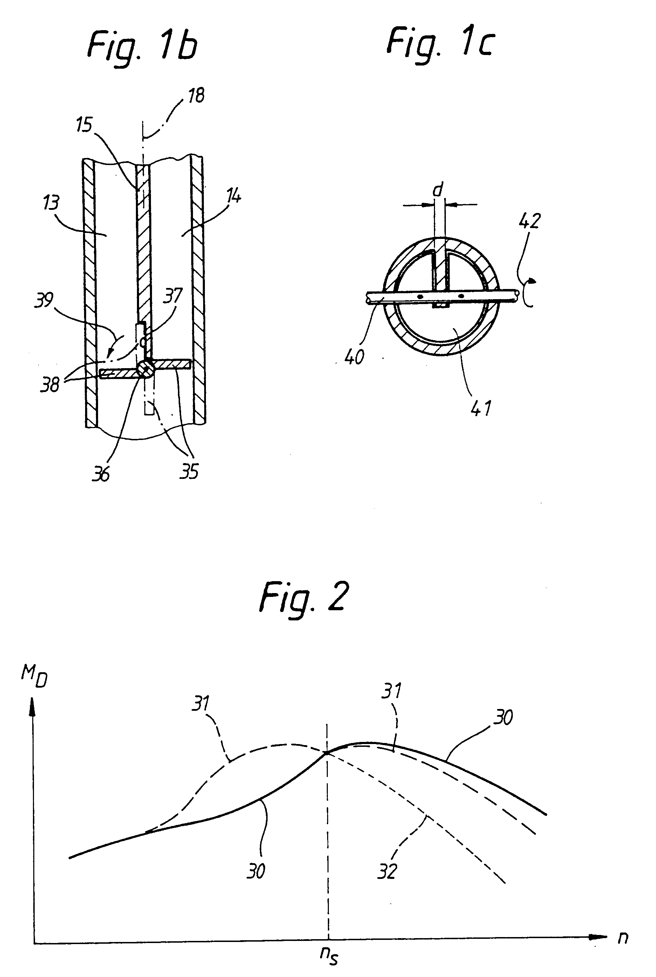

Figur 1 zeigt in einer Draufsicht eine 6-zylindrige Hubkolbenbrennkraftmaschine 1 der Reihenbauart. An dieser Brennkraftmaschine 1 ist einlaßseitig ein Ansaugsystem 2 angeordnet, welches folgendermaßen aufgebaut ist. Von einer gemeinsamen Ansaugleitung 3 sind zwei Resonanzsaugrohre 4 und 5 abgezweigt, welche in einen Resonanzsammelbehälter 6 einmünden. Ferner ist die Ansaugleitung 3 mit dem Resonanzsammelbehälter 6 über ein im Vergleich zu den beiden Resonanzsaugrohren 4 und 5 relativ kurzes und querschnittstarkes Saugrohr 7 verbunden. Die Regelung der Brennkraftmaschinenlast erfolgt über die in der Ansaugleitung 3 angeordnete Drosselklappe 8. Der Resonanzsammelbehälter 6 ist über ein als Klappe 9 ausgebildetes Trennelement, welches in einer Trennwandung 10 angeordnet ist, bedarfsweise in zwei Teilsammelvolumen 11 und 12 unterteilbar. Das Resonanzsaugrohr 4 ist dabei an das Teilsammelvolumen 11 und das Resonanzsaugrohr 5 an das Teilsammelvolumen 12 angeschlossen. Das die Ansaugleitung 3 mit dem Resonanzsammelbehälter 6 verbindende kurze Saugrohr 7 weist eine dieses in zwei Fluten 13 und 14 unterteilende Trennwand 15 auf, welche dann in einer Ebene mit der Klappe 9 liegt, wenn letztere geschlossen ist. In Verlängerung der Trennwand 15 an deren der Klappe 9 abgewandten Stirnseite 16 ist in dem kurzen Saugrohr 7 ferner ein die beiden Fluten 13 und 14 bzw. ein den Querschnitt des kurzen Saugrohrs 7 steuerndes Ventilelement 17 angeordnet. Das Ventilelement 17 ist dabei ausgebildet als eine um eine sowohl senkrecht zur Ebene der Trennwand 15 als auch senkrecht zur Mittellängsachse 18 des Saugrohres 7 verlaufende Achse 19 drehbare Klappe 20 (s. auch Figur 1a), welche mit einer Halbscheibe 21 verbunden ist, deren halbkreisförmige Außenkontur 22 in einer entsprechenden Ausnehmung 23 an der Stirnseite 16 der Trennwand 15 anliegt.
In der in Figur 1 dargestellten Lage eines geschlossenen Ventilelementes 17 ist eine vollkommene Trennung der beiden Teilsammelvolumen 11 und 12 gegeben. In den beiden Resonanzsaugrohren 4 und 5 ist je eine weitere Klappe 24 bzw. 25 angeordnet. Angesteuert werden sämtliche Klappen 9, 24, 25 sowie das Ventilelement 17 über eine elektronische Steuereinheit 26 und zwar in Abhängigkeit der Brennkraftmaschinendrehzahl n. Diese wird mittels des Sensors 27 am Schwungrad 28 der Brennkraftmaschine 1 abgegriffen und über die Meßwertleitung 29 an die elektronische Steuereinheit 26 übermittelt.

In der Figur 2 ist in einem Diagramm M_{D}=f(n) der Zusammenhang zwischen dem Motordrehmoment M_{D} und der Drehzahl n bei einer konventionellen Brennkraftmaschine, also einer Brennkraftmaschine ohne Resonanzaufladung (durchgezogener Graph 30) und einer Brennkraftmaschine mit Resonanzaufladung (gestrichelter Graph 31) aufgezeigt. Die durchgezogene Kurve 30 zeigt, daß ohne eine Resonanzaufladung im Bereich niederer und mittlerer Drehzahlen nur ein relativ niederes Drehmomentniveau vorliegt. Wird nun in diesen Drehzahlbereichen eine Resonanzaufladung vorgesehen, also über relativ lange Resonanzsaugrohre und getrennte Teilsammelvolumina angesaugt, so kann hier, wie der Verlauf des gestrichelten Graphen 31 zeigt, eine deutliche Anhebung des Drehmomentniveaus erreicht werden. Um nun bei einer Resonanzaufladung im höheren Drehzahlbereich nicht einen extremen Einbruch in Drehmomentverlauf zu erhalten (s. dünne gestrichelte Linie 32), ist bei derartigen Verfahren generell vorgesehen, ab dem Grenzwert nₛ (im folgenden Schaltdrehzahl nₛ genannt) für die Brennkraftmaschinendrehzahl n, ab dem sich der Momenteneinbruch andeutet, die beiden Teilsammelvolumina im Resonanzbehälter miteinander zu verbinden. Da nun aber bei bisher bekannten Verfahren auch oberhalb der Schaltdrehzahl nₛ immer noch über lange Resonanzsaugrohre angesaugt wird, kann im höheren Drehzahlbereich im Vergleich zu einer konventionellen Brennkraftmaschine nur ein geringeres Drehmomentniveau erreicht werden (Verlauf des gestrichelten Graphen 31 oberhalb der Schaltdrehzahl nₛ).
Nach dem erfindungsgemäßen Verfahren ist nun vorgesehen, bis hin zur Schaltdrehzahl nₛ ausschließlich über die beiden Resonanzsaugrohre 4 und 5 (Figur 1) bei geschlossener Trennklappe 9 anzusaugen. Mit Überschreiten dieser Schaltdrehzahl nₛ wird die Trennklappe 9 im Resonanzsammelbehälter 6 geöffnet und gleichzeitig auch der Querschnitt des kurzen, den Resonanzsammelbehälter 6 mit der Ansaugleitung 3 verbindenden Saugrohres 7 freigegeben. Damit kann nun die Frischluft auf kürzestem und somit im Hinblick auf die Reibung verlustärmstem Wege angesaugt werden, so daß oberhalb dieser Schaltdrehzahl nₛ das hohe Drehmomentniveau eines konventionellen Saugmotors (Figur 2: durchgezogener Graph 30 oberhalb der Schaltdrehzahl nₛ) erreichbar ist. Die Freigabe des Querschnittes des kurzen Saugrohres 7 erfolgt durch ein Drehen des Ventilelementes 17 um 90° in Richtung des Pfeiles **88**, wonach es sich in der in Figur 1a gestrichelt dargestellten Lage befindet, so daß die Frischluft rechts und links der Halbscheibe 21 ungehindert vorbeiströmen kann. Ausgehend von der in der Figur 1a gezeigten Schließlage (durchgezogene Darstellung) kann die Klappe natürlich auch um 90° entgegen der Richtung des Pfeiles **88** gedreht werden. Es ist ferner vorgesehen, ab dieser Schaltdrehzahl nₛ die beiden Klappen 24 und 25 in den Resonanzsaugrohren 4 und 5 zu schließen, so daß eine gegenseitige Beeinflussung der über die Resonanzsaugrohre 4 und 5 in den Resonanzsammelbehälter 6 gelangenden Strömungen ausgeschlossen ist. Durch diese Maßnahme kann eine zusätzliche Verbesserung des Liefergrades und damit des Drehmomentverlaufes erzielt werden. Die Ansteuerung der Klappen 9, 24 und 25 sowie des Ventilelementes 17 erfolgt von der Steuereinheit 26 aus (s. Figur 1), wobei die Betätigung der einzelnen Klappen 9, 24 und 25 sowie des Ventilelementes 17 über geeignete Stellmotoren, die in der Zeichnung der Übersichtlichkeit wegen nicht dargestellt sind, erfolgt, an welche die Steuerleitungen 33 und 34 angeschlossen sind. Da die Trennklappe 9 und das Ventilelement 17 bzw. die beiden Klappen 24 und 25 erfindungsgemäß jeweils synchron zueinander zu betätigen sind, genügt ein gemeinsamer Stellmotor für die Klappe 9 und das Ventilelement 17 welcher über die Steuerleitung 33 angesteuert wird und welcher über einen geeigneten Betätigungsmechanismus beide Bauelemente 9 und 17 synchron betätigt (Bezugsziffer 33a und 33b). Das gleiche gilt ebenso für die Betätigung der beiden Klappen 24 und 25, für die ebenso ein Stellmotor genügt, welcher nach Ansteuerung über die Steuerleitung 34 beide Klappen 24 und 25 über einen geeigneten Betätigungsmechanismus synchron betätigt (Bezugsziffer 34a und 34b).

Anstelle der in Figur 1a dargestellten Möglichkeit zur Steuerung des die beiden Fluten 13 und 14 passierenden Luftstromes kann, wie in Figur 1b gezeigt, eine gewöhnliche Klappe 35 vorgesehen sein, welche um eine sowohl in der Ebene der Trennwand 15 als auch senkrecht zur Mittellängsachse 18 des Saugrohres 7 verlaufende Achse 36 verschwenkbar ist. Die Trennwand 15 weist an ihrer dem Resonanzsammelbehälter 6 abgewandten Stirnseite eine Ausnehmung 37 auf, welche in Öffnungsstellung der Klappe 35 die Klappenhälfte 38 aufnimmt (gestrichelte Darstellung der Klappe 35), so daß die Klappe 35 sozusagen in der Ebene der Trennwand 15 liegt. In dieser Stellung wird die Trennwand 15 um den halben Klappendurchmesser verlängert. Um das Saugrohr 7 zu schließen, bzw. um die beiden Fluten 13 und 14 voneinander zu trennen, wird die Klappe 35 um 90° in Richtung des Pfeiles 39 verschwenkt (durchgezogene Darstellung der Klappe 35).

Eine weitere Lösung zur Steuerung des die beiden Fluten passierenden Luftstromes ist in der Figur 1c dargestellt. Hier sind die beiden Fluten durch eine geschlitzte, auf einer Welle 40 drehfest gelagerte Klappe 41 steuerbar, wobei die Breite des Schlitzes nahezu gleich der Dicke d der Trennwand 15 ist. In der Zeichnung befindet sich die Klappe 41 in ihrer Schließstellung. Um in Öffnungsstellung zu gelangen, muß die Klappe 41 bzw. die Welle 40 um 90° in Richtung des Pfeiles 42 gedreht werden.
Anstelle über eine geschlitzte Klappe 41 ist es auch möglich, jede der beiden Fluten über je eine separate Klappe steuern, wobei dann natürlich diese beiden Klappen synchron zu betätigen sind.

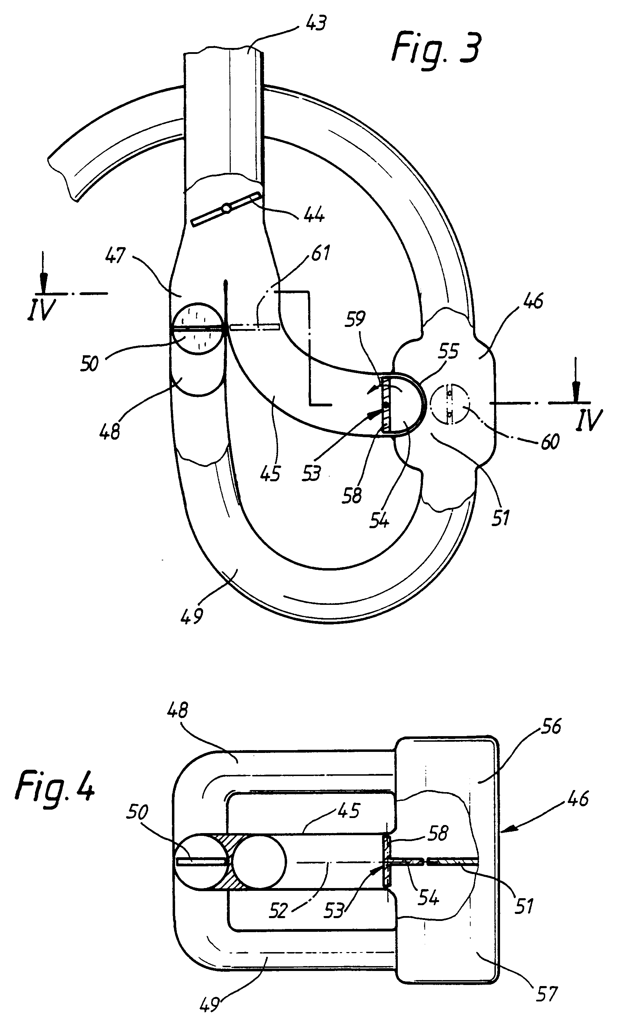

Ein weiteres Ausführungsbeispiel einer Vorrichtung zur Durchführung des erfindungsgemäßen Verfahrens ist mit den Figuren 3 und 4 aufgezeigt. Bei dieser Ausführungsform verzweigt die Ansaugleitung 43, in welcher die Drosselklappe 44 zur Steuerung der Brennkraftmaschinenlast angeordnet ist, in ein kurzes Saugrohr 45, welches an einen Resonanzsammelbehälter 46 angeschlossen ist und in eine weitere Leitung 47, die wiederum in zwei lange Resonanzsaugrohre 48 und 49 verzweigt, die ebenfalls an den Resonanzsammelbehälter 46 angeschlossen sind. Der Querschnitt des Saugrohres 45 ist im Vergleich zu dem eines Resonanzsaugrohres 48 bzw. 49 relativ groß. In der weiteren Leitung 47 ist stromauf der Verzweigung in die beiden Resonanzsaugrohre 48 und 49 eine den Querschnitt dieser weiteren Leitung 47 steuernde Klappe 50 angeordnet. In Figur 4, welche eine Schnittdarstellung der Figur 3 längs der Linie IV-IV zeigt, ist zu sehen, daß der Resonanzsammelbehälter 46 eine Trennwand 51 aufweist, welche in Richtung der Mittellängsachse 52 des Saugrohres 45 weist. Im Bereich der Einmündung des Saugrohres 45 in den Resonanzsammelbehälter 46 ist ein Ventilelement 53 vorgesehen, welche genauso aufgebaut ist, wie das Ventilelement 17 bei der Ausführungsform nach der Figur 1a, nur daß die Halbscheibe 54 in Schließstellung nicht in einer korrespondierenden Ausnehmung einer in dem Saugrohr angeordneten Trennwand, sondern in einer solchen Ausnehmung 55 in der Trennwand 51 im Resonanzsammelbehälter 46 anliegt (s. Figur 3). Bei geschlossenem Ventilelement 53 ist also der Resonanzsammelbehälter 46 in die beiden Teilsammelvolumina 56 und 57 unterteilt und gleichzeitig das Saugrohr 45 verschlossen (über die Klappe 58 des Ventilelementes 53). Wird nun das Ventilelement 53 um 90° in Richtung des Pfeiles 59 gedreht, so werden gleichzeitig die beiden Teilsammelvolumina 56 und 57 miteinander verbunden und der Querschnitt des Saugrohres 45 freigegeben. Ein gesonderter Mechanismus zur synchronen Betätigung einer Klappe und eines Ventilelementes, wie er beim Ausführungsbeispiel nach der Figur 1 vorgesehen ist, ist hier nicht mehr erforderlich. Das gleiche gilt für die Steuerung der Querschnitte der beiden langen Resonanzsaugrohre 48 und 49, welche bei diesem Ausführungsbeispiel beide über die in der weiteren Leitung 47 angeordnete Klappe 50 gesteuert werden. Das Resonanzsaugrohr 48 ist an das Teilsammelvolumen 56 und das Resonanzsaugrohr 49 an das Teilsammelvolumen 57 angeschlossen (Figur 4). Angesteuert werden Klappe 50 und Ventilelement 53, wie auch beim ersten Ausführungsbeispiel über eine hier nicht dargestellte elektronische Steuereinheit in Abhängigkeit der Brennkraftmaschinendrehzahl n.
Gemäß dem Diagramm der Figur 2 ist bis hin zur Schaltdrehzahl nₛ das Ventilelement 53 in Schließstellung und die Klappe 50 in Öffnungsstellung. Es wird also ausschließlich über die beiden Resonanzsaugrohre 48 und 49 und die beiden voneinander getrennten Teilsammelvolumen 56 und 57 angesaugt. Mit Überschreiten dieser Schaltdrehzahl nₛ wird das Ventilelement 53 geöffnet und die Klappe 50 geschlossen, so daß eine Verbindung der beiden Teilsammelvolumina 56 und 57 hergestellt ist und ausschließlich über das kurze Saugrohr 45 angesaugt wird.

Selbstverständlich ist auch eine in Figur 3 gestrichelt dargestellte Alternative denkbar und zwar anstelle über das Ventilelement 53 die Trennung der beiden Teilsammelvolumina 56 und 57 ,-wie nach Figur 1-, über eine separate Trennklappe 60 vorzusehen und den Querschnitt des Saugrohres über ein zweites Ventilelement 61 zu steuern, wobei das Ventilelement 61 gemäß einer Lösung nach Figur 1a, 1b oder 1c ausgeführt sein muß. Auch dann müßte natürlich wieder eine synchrone Betätigung dieser beiden Klappen 60 und 61 erfolgen, d.h. bis zur Schaltdrehzahl nₛ müßten die beiden Elemente 60 und 61 geschlossen und ab dieser Schaltdrehzahl nₛ, also dann, wenn die Klappe 50 geschlossen ist, geöffnet sein. In vorteilhafter Ausgestaltung könnten dann z.B. das den Querschnitt des kurzen Saugrohres 45 steuernde Ventilelement 61 gemäß Lösung in Figur 1b und die die Querschnitte der beiden langen Resonanzsaugrohre steuernde Klappe 50 um 90° zueinander verschwenkt auf einer Welle gelagert sein und gemeinsam betätigt werden. Selbstverständlich wäre in solch einem Fall die Ausnehmung 55 nicht mehr vorhanden, sondern die Trennwand müßte sich in das kurze Saugrohr 45 hineinerstrecken und zwar bis hin zum Ventilelement 61, um unterhalb der Schaltdrehzahl nₛ eine Verbindung der beiden Teilsammelvolumina 56 und 57 ausschließen zu können.

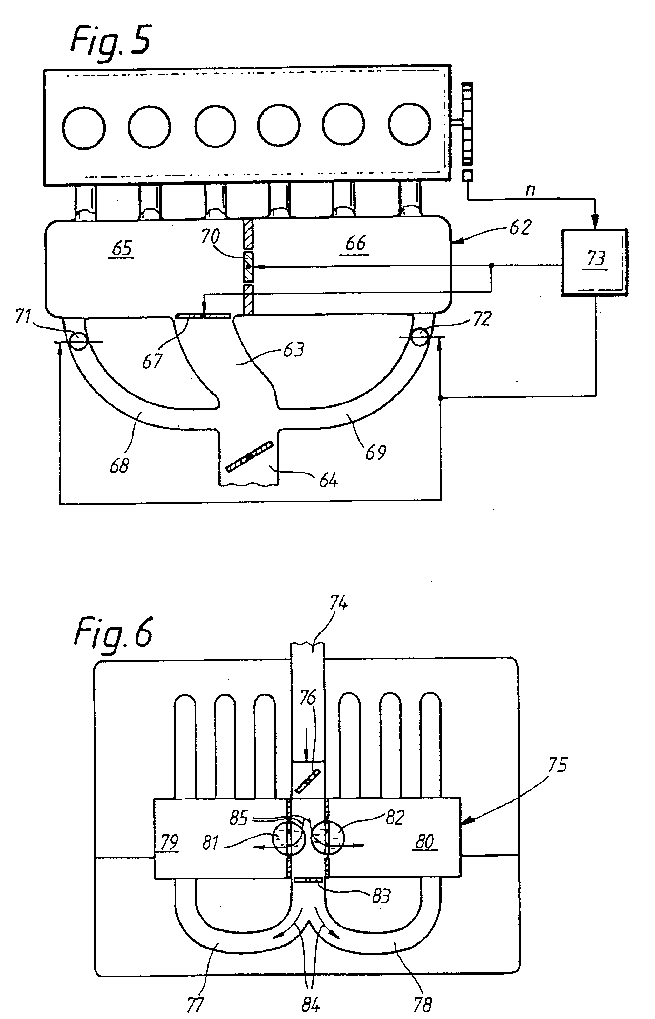

Bei einer weiteren, in Figur 5 gezeigten Ausführungsform ist vorgesehen, das den Resonanzsammelbehälter 62 mit der Ansaugleitung 64 verbindende kurze Saugrohr 63 im Bereich des einen Teilsammelvolumens 65 anzuschließen, so daß in dem Saugrohr 63 zur Verhinderung einer Verbindung der beiden Teilsammelvolumina 65 und 66 keine separate Trennwand mehr vorzusehen ist. Es genügt eine einfache Klappe 67, welche dann eben, wenn ausschließlich über die beiden langen Resonanzsaugrohre 68 und 69 angesaugt wird, geschlossen ist, wie auch die Klappe 70 im Resonanzsammelbehälter 62. Oberhalb der Schaltdrehzahl nₛ schließlich werden die beiden Klappen 67 und 70 synchron geöffnet und die beiden Klappen 71 und 72 in den langen Resonanzsaugrohren 68 und 69 synchron geschlossen, so daß wiederum eine Verbindung zwischen den beiden Teilsammelvolumina 65 und 66 gegeben ist und ausschließlich über das kurze Saugrohr 63 angesaugt wird. Die Ansteuerung der Klappen 67, 70, 71 und 72 erfolgt auch hier über eine elektronische Steuereinheit 73 in Abhängigkeit der Brennkraftmaschinendrehzahl n.

Nach der Figur 6 ist vorgesehen, die Ansaugleitung 74 durch den Resonanzsammelbehälter 75 hindurchzuführen. Stromauf des Eintritts in den Resonanzsammelbehälter 75 ist in der Ansaugleitung 74 eine Drosselklappe 76 zur Steuerung der Brennkraftmaschinenlast angeordnet. An dieser Stelle kann auch der Stellantrieb für ein elektronisches Gaspedal angeordnet sein. Nach dem Austritt aus dem Resonanzsammelbehälter 75 verzweigt die Ansaugleitung 74 in zwei lange Resonanzsaugrohre 77 und 78 mit relativ geringem Querschnitt. Die Ansaugleitung 74 unterteilt den Resonanzsammelbehälter 75 in zwei Teilsammelvolumina 79 und 80. In dem Bereich, in dem die Ansaugleitung 74 durch den Resonanzsammelbehälter 75 hindurchführt, ist deren Wandung mit zwei Klappen 81 und 82 versehen. Sind diese in Öffnungsstellung, so ist eine direkte Verbindung mit dem Resonanzsammelbehälter 75, sowie eine direkte Verbindung der beiden Teilsammelvolumina 79 und 80 untereinander hergestellt. In Schließstellung hingegen sind die beiden Teilsammelvolumina 79 und 80 voneinander getrennt. Das Resonanzsaugrohr 77 ist an das Teilsammelvolumen 79 und das Resonanzsaugrohr 78 an das Teilsammelvolumen 80 angeschlossen. Stromab der beiden in der Wandung der Ansaugleitung 74 angeordneten Klappen 81 und 82 ist der Querschnitt der Ansaugleitung 74 und somit die Querschnitte der beiden Resonanzsaugrohre 77 und 78 über eine weitere Klappe 83 steuerbar. Erfindungsgemäß ist nun vorgesehen, daß bis hin zur Schaltdrehzahl nₛ die beiden Klappen 81 und 82 geschlossen sind und die Klappe 83 geöffnet ist. Die Luft wird also ausschließlich über die beiden langen Resonanzsaugrohre 77 und 78 (Pfeile 84) angesaugt. Bei Überschreiten der Schaltdrehzahl nₛ werden gleichzeitig die beiden Klappen 81 und 82 in der Wandung der Ansaugleitung 74 geöffnet und die Klappe 83 geschlossen (Klappenstellung in der Figur 6). Die Luft wird in diesem Betriebsbereich also auf kurzem und somit verlustarmem Weg direkt über den Resonanzsammelbehälter 75, dessen beide Teilsammelvolumina 79 und 80 jetzt auch miteinander in Verbindung stehen, angesaugt (Pfeile 85).

## Patentansprüche

1. Verfahren zur Steuerung der Luftzufuhr bei einer Brennkraftmaschine (1), bei welchem unterhalb eines vorgegebenen Grenzwertes für die Brennkraftmaschinendrehzahl die Luft über mindestens zwei lange Resonanzsaugrohre (4, 5 bzw. 48, 49 bzw. 68, 69 bzw. 77, 78) angesaugt wird, von denen jedes in jeweils eines von zwei über ein Trennelement (9, 53, 60, 70, 81, 82) voneinander trennbaren Teilsammelvolumina eines Resonanzsammelbehälters (6, 46, 62, 75) einmündet und bei welchem oberhalb der vorgegebenen Grenzdrehzahl die beiden Teilsammelvolumina (11, 12 bzw. 56, 57 bzw. 65, 66 bzw. 80, 81) durch Öffnen des Trennelementes (9, 53, 60, 70, 81, 82) miteinander verbunden werden,
**dadurch gekennzeichnet,**
daß gleichzeitig mit dem Öffnen des Trennelementes (9, 53, 60, 70, 81, 82) der Querschnitt eines kurzen, die Ansaugleitung (3, 43, 64, 74) mit dem Resonanzsammelbehälter (6, 46, 62, 75) verbindenden Saugrohres (7, 45, 63) freigegeben wird und die beiden langen Resonanzsaugrohre (4, 5 bzw. 48, 49 bzw. 68, 69 bzw. 77, 78) verschlossen werden.

2. Vorrichtung an einer Brennkraftmaschine (1) zur Durchführung des Verfahrens nach Anspruch 1 mit mindestens zwei langen Resonanzsaugrohren (4, 5), von denen jedes in jeweils eines von zwei über ein drehzahlabhängig steuerbares Trennelement (9) voneinander trennbaren Teilsammelvolumina (11, 12) eines Resonanzsammelbehälters (6) einmündet,
**dadurch gekennzeichnet,**
daß das Trennelement als Klappe (9) ausgebildet ist, daß in dem kurzen Saugrohr (7) eine dieses in zwei Fluten (13, 14) unterteilende Trennwand (15) vorgesehen ist, welche in einer Ebene liegt mit der geschlossenen Trennklappe (9) und daß an der dem Resonanzbehälter (6) abgewandten Stirnseite (16) der Trennwand (15) ein beide Fluten (13, 14) gleich steuerndes Ventilelement (17) angeordnet ist und daß die zwei langen Resonanzsaugrohren (4,5) je eine Klappe (24,25) aufweisen.

3. Vorrichtung nach Anspruch 2,
**dadurch gekennzeichnet,**
daß das Ventilelement (17) ausgebildet ist, als eine um eine sowohl senkrecht zur Ebene der Trennwand (15) als auch senkrecht zur Mittellängsachse (18) des kurzen Saugrohres (7) verlaufende Achse (19) drehbare Klappe (20) ausgebildet ist, welche mit einer im wesentlichen in einer Ebene mit der Trennwand (15) liegenden Halbscheibe (21) verbunden ist, deren halbkreisförmige Außenkontur (22) an einer korrespondierenden Ausnehmung (23) an der Stirnseite (16) der Trennwand (15) anliegt.

4. Vorrichtung nach Anspruch 2,
**dadurch gekennzeichnet,**
daß das die beiden Fluten (13, 14) steuernde Ventilelement (17) eine um eine in der Ebene der Trennwand (15) und senkrecht zur Mittellängsachse (18) des kurzen Saugrohres (7) verlaufende, an der dem Resonanzsammelbehälter (6) abgewandten Stirnseite der Trennwand (15) vorgesehene Achse (36) drehbar gelagerte Klappe (35) ist, welche in Schließstellung das kurze Saugrohr (7) verschließt und die beiden Fluten (13, 14) voneinander trennt und in Öffnungsstellung in der Ebene der Trennwand (15) liegt.

5. Vorrichtung an einer Brennkraftmaschine (1) zur Durchführung des Verfahrens nach Anspruch 1 mit mindestens zwei langen Resonanzsaugrohren (68, 69), von denen jedes in jeweils eines von zwei über ein drehzahlabhängig steuerbares Trennelement (70) voneinander trennbaren Teilsammelvolumina (65, 66) eines Resonanzsammelbehälters (62) einmündet,
**dadurch gekennzeichnet,**
daß das kurze Saugrohr (63) an eines der beiden Teilsammelvolumina (65, 66) angeschlossen ist und daß dessen Querschnitt mittels einer Klappe (67) steuerbar ist und daß die zwei langen Resonanzsaugrohren (68,69) je eine Klappe (71,72) aufweisen.

6. Vorrichtung an einer Brennkraftmaschine (1) zur Durchführung des Verfahrens nach Anspruch 1 mit mindestens zwei langen Resonanzsaugrohren (48, 49), von denen jedes in jeweils eines von zwei über ein drehzahlabhängig steuerbares Trennelement (53) voneinander trennbaren Teilsammelvolumina (56, 57) eines Resonanzsammelbehälters (46) einmündet,
**dadurch gekennzeichnet,**
daß das Trennelement und das den Querschnitt des Kurzen Saugrohres (45) steuernde Ventilelement eine Baueinheit bilden und daß die zwei lange Resonanzsaugrohren (48,49) von einer eine Klappe (50) aufweisenden Leitung (47) ausgehen.

7. Vorrichtung nach Anspruch 6,
**dadurch gekennzeichnet,**
daß in dem Resonanzsammelbehälter (46) eine die beiden Teilsammelvolumen (56, 57) voneinander trennende, in Richtung der Mittellängsachse (52) des kurzen Saugrohres (45) gerichtete Trennwand (51) angeordnet ist und daß im Bereich der Einmündung des kurzen Saugrohres (45) in den Resonanzsammelbehälter (46) eine um eine sowohl senkrecht zur Ebene der Trennwand (51) als auch senkrecht zur Mittellängsachse (52) des kurzen Saugrohres (45) verlaufende Achse drehbare Klappe vorgesehen ist, welche mit einer im wesentlichen in einer Ebene mit der Trennwand (51) liegenden Halbscheibe (54) verbunden ist, deren halbkreisförmige Außenkontur an einer korrespondierenden Ausnehmung (55) an der Stirnseite der Trennwand (51) anliegt.

8. Vorrichtung an einer Brennkraftmaschine (1) zur Durchführung des Verfahrens nach Anspruch 1 mit mindestens zwei langen Resonanzsaugrohren (77, 78), von denen jedes in jeweils eines von zwei über ein drehzahlabhängig steuerbares Trennelement (81, 82) voneinander trennbaren Teilsammelvolumina (79, 80) eines Resonanzsammelbehälters einmündet,
**dadurch gekennzeichnet,**
daß die Ansaugleitung (74) durch einen Resonanzsammelbehälter (75) hindurchgeführt ist, welcher durch sie in zwei Teilsammelvolumina (79, 80) unterteilbar ist, daß in der Wandung der Ansaugleitung (74) zwei Klappen (81, 82) angeordnet sind, die bei Überführen in deren Öffnungsstellung eine Verbindung der beiden Teilsammelvolumina (79, 80) untereinander herstellen, daß stromab dieser Klappen (81, 82) der Querschnitt der Ansaugleitung (74) durch eine weitere Klappe (83) steuerbar ist und daß stromab der weiteren Klappe (83) die Ansaugleitung (74) in zwei lange Resonanzrohre (77, 78) verzweigt, von denen eines (77) an das eine Teilsammelvolumen (79) und das andere (78) an das andere Teilsammelvolumen (80) angeschlossen ist.

## Claims

1. A process to control the air intake in an internal combustion engine (1) in which below a specified limit value for the speed of the internal combustion engine air is taken in via at least two long resonance induction pipes (4, 5 / 48, 49 / 68, 69 / 77, 78) each of which opens into one of two collecting chambers in a resonance collecting vessel (6, 46, 62, 75) which can be divided by means of a separator (9, 53, 60, 70, 81, 82) and in which, above the specified limit speed, the two collecting chambers (11, 12 / 56, 57 / 65, 66 / 80, 81) are connected by the opening of the separator (9, 53, 60, 70, 81, 82),
**characterised in that,**
simultaneously with the opening of the separator (9, 53, 60, 70, 81, 82) the cross section of a short suction pipe (7, 45, 63) connecting the induction line (3, 43, 64, 74) with the resonance collecting vessel (6, 46, 62, 75) is released and the two long resonance induction pipes (4, 5 / 48, 49 / 68, 69 / 77, 78) are closed.

2. A device in an internal combustion engine (1) for the performance of the process as per claim 1 with at least two long resonance induction pipes (4, 5) each of which opens into one of two collecting chambers (11, 12) in a resonance collecting vessel (6) separable by means of an engine speed controlled separator (9),
**characterised in that,**
the separator is designed as a damper (9), that the short suction pipe (7) contains a partition (15) which is in the same plane as the closed separating damper (9) which divides it into two channels (13, 14) and that a valve (17) controlling both channels (13, 14) is fitted to the front (16) of the partition (15) opposite the resonance collecting vessel (6) and that the two long resonance induction pipes (4, 5) each have one damper (24, 25).

3. A device as per claim 2,
**characterised in that,**
the valve (17) is designed as a damper (20) which pivots about an axis (19) which is both vertical to the plane of the partition (15) and vertical to the central longitudinal axis (18) of the short suction pipe (7), which is connected to a semi-circular disc (21) essentially in the same plane as the partition (15), the semi-circular outer contour (22) of which fits into a corresponding recess (23) in the front (16) of the partition (15).

4. A device as per claim 2,
**characterised in that,**
the valve (17) controlling the two channels (13, 14) is a damper (35) which pivots about an axis (36) on the front of the partition (15) opposite the resonance collecting vessel (16) which is in the same plane as the partition (15) and vertical to the central longitudinal axis (18) of the short suction pipe (7), which closes the short suction pipe (7) and separates the two channels (13, 14) in the closed position and lies in the same plane as the partition (15) in the open position.

5. A device in an internal combustion engine (1) for the performance of the process as per claim 1 with at least two long induction pipes (68, 69) each of which opens into one of two collecting chambers (65, 66) in a resonance collecting vessel (62) which can be divided by means of an engine speed controlled separator (70),
**characterised in that,**
the short suction pipe (63) is connected to one of the two collecting chambers (65, 66) and that its cross section can be controlled by means of a damper (67) and that the two long resonance induction pipes (68, 69) each have one damper (71, 72).

6. A device in an internal combustion engine (1) for the performance of the process as per claim 1 with at least two long induction pipes (48, 49) each of which opens into one of two collecting chambers (56, 57) in a resonance collecting vessel (46) which can be divided by means of an engine speed controlled separator (53),
**characterised in that,**
the separator and the valve controlling the cross section of the short suction pipe (45) form one unit and that the two long resonance induction pipes (48, 49) emanate from a line (47) fitted with a damper (50).

7. A device as per claim 6
**characterised in that,**
a partition (51) is fitted in the resonance collecting vessel (46) positioned in the same direction as the central longitudinal axis (52) of the short suction pipe (45) which separates the two collecting chambers (56, 57) and that fitted in the region of the mouth of the short suction pipe (45) is a damper which pivots about an axis (52) which is both vertical to the plane of the partition (51) and vertical to the central longitudinal axis (52) of the short suction pipe (45) which is connected to a semi-circular disc (54) essentially in the same plane as the partition (51), the semi-circular outer contour of which fits into a corresponding recess (55) in the front of the partition (51).

8. A device in an internal combustion engine (1) for the performance of the process as per claim 1 with at least two long induction pipes (77, 78) each of which opens into one of two collecting chambers (79, 80) in a resonance collecting vessel (46) which can be divided by means of an engine speed controlled separator (81, 82),
**characterised in that,**
the induction line (74) passes through a resonance collecting vessel (75) which can thus be divided into two collecting chambers (79, 80), that two dampers (81, 82) are fitted in the wall of the induction line (74) which when air is passed over them in the open position form a connection between the two collecting chambers (79, 80) when in the open position, that downstream of these dampers (79, 80) the cross section of the induction line (74) can be controlled by means of a further damper (83) and that downstream of the further damper (83) the induction line (74) branches into two long resonance pipes (77, 78) one (77) of which is connected to one of the collecting chambers (79) and the other (78) is connected to the other collecting chamber (80).

## Revendications

1. Procédé pour contrôler l'admission d'air pour un moteur à combustion interne (1), dans lequel, au-dessous d'une valeur limite prédéterminée de la vitesse de rotation du moteur à combustion interne, l'air est aspiré par au moins deux tubes d'aspiration à résonance (4, 5, respectivement 48, 49, respectivement 68, 69, respectivement 77, 78), dont chacun débouche respectivement dans l'un de deux volumes collecteurs partiels d'un récipient collecteur à résonance (6, 46, 62, 75), susceptible d'être isolés l'un de l'autre, par l'intermédiaire d'un élément obturateur (9, 53, 60, 70, 81, 82), et procédé dans lequel, au-dessus de la valeur limite prédéterminée de la vitesse de rotation, les deux volumes collecteurs partiels (11, 12, respectivement 56, 57, respectivement 65, 66, respectivement 80, 81) sont reliés ensemble par ouverture de l'élément obturateur (9, 53, 60, 70, 81, 82), caractérisé en ce que simultanément à l'ouverture de l'élément obturateur (9, 53, 60, 70, 81, 82), la section transversale d'un court tube d'aspiration (7, 45, 63), assurant la liaison entre la conduite d'aspiration (3, 43, 64, 74) et le récipient collecteur à résonance (6, 46, 62, 75), est libérée et les deux tubes à résonance longs (4, 5, respectivement 48, 49, respectivement 68, 69, respectivement 77, 78) sont obturés.

2. Dispositif monté sur un moteur à combustion interne (1), pour mettre en oeuvre le procédé selon la revendication 1, avec au moins deux tubes à résonance longs (4, 5), dont chacun débouche dans l'un de deux volumes collecteurs partiels (11, 12) d'un récipient collecteur à résonance (6), susceptibles d'être isolés l'un de l'autre par l'intermédiaire d'un élément obturateur (9), pouvant être commandé en fonction de la vitesse de rotation, caractérisé en ce que l'élément obturateur est réalisé sous forme de papillon (9), en ce que dans le tuyau d'aspiration court (7) est prévue une paroi de séparation (15), le subdivisant en deux écoulements (13, 14) et située dans le plan du papillon de séparation (9) fermé, et en ce que sur la face frontale (16), opposée au récipient à résonance (6), de la paroi de séparation (15) est disposé un opercule (17), commandant les deux écoulements (13, 14) de façon identique et en ce que les deux tubes d'aspiration à résonance longs (4, 5) présentent chacun un papillon (24, 25).

3. Dispositif selon la revendication 2, caractérisé en ce que l'obturateur (17) est réalisé sous forme d'un papillon (20), pouvant tourner autour d'un axe (19) s'étendant tant perpendiculairement par rapport au plan de la paroi de séparation (15), qu'également perpendiculairement à l'axe longitudinal médian (18) du tube d'aspiration court (7), et relié à un demi-disque (21) situé sensiblement dans le plan de la paroi de séparation (15), dont le contour extérieur (22), en forme de demi-cercle, appuie sur un évidement (23) correspondant ménagé sur la face frontale (16) de la paroi de séparation (15).

4. Dispositif selon la revendication 2, caractérisé en ce que l'opercule (17) commandant les deux écoulements (13, 14) est un papillon (35), tourillonnant autour d'un axe (36) prévu sur la face frontale de la paroi de séparation (15) opposée au récipient collecteur à résonance (6), s'étendant perpendiculairement par rapport à l'axe longitudinal médian (18) du tuyau d'aspiration court (7), papillon (35) qui, en position de fermeture, obture le tube d'aspiration court (7) et isole l'un de l'autre les deux écoulements (13, 14) et qui, en position d'ouverture, est situé dans le plan de la paroi de séparation (15).

5. Dispositif monté sur un moteur à combustion interne (1), pour mettre en oeuvre le procédé selon la revendication 1, avec au moins deux tubes à résonance longs (68, 69), dont chacun débouche dans l'un de deux volumes collecteurs partiels (65, 66) d'un récipient collecteur à résonance (62), susceptibles d'être isolés l'un de l'autre par l'intermédiaire d'un élément obturateur (70), pouvant être commandé en fonction de la vitesse de rotation, caractérisé en ce que le tuyau d'aspiration court (63) est raccordé à l'un des deux volumes collecteurs partiels (65, 66) et en ce que sa section transversale peut être commandée au moyen d'un papillon (67), et en ce que les deux tubes d'aspiration longs (68, 69) présentent chacun un papillon (71, 72).

6. Dispositif monté sur un moteur à combustion interne (1), pour mettre en oeuvre le procédé selon la revendication 1, avec au moins deux tubes à résonance longs (48, 49), dont chacun débouche dans l'un de deux volumes collecteurs partiels (56, 57) d'un récipient collecteur à résonance (46), susceptibles d'être isolés l'un de l'autre par l'intermédiaire d'un élément obturateur (53), pouvant être commandé en fonction de la vitesse de rotation, caractérisé en ce que l'élément obturateur et l'opercule, commandant la section transversale du tube d'aspiration court (45) constituent un ensemble de construction, et en ce que les deux tubes d'aspiration longs (48, 49) partent d'une conduite (47) présentant le papillon (50).

7. Dispositif selon la revendication 6, caractérisé en ce que dans le récipient collecteur à résonance (46) est disposé une paroi de séparation (51), séparant l'un de l'autre les deux volumes collecteurs partiels (56, 57), orientée dans la direction de l'axe longitudinal médian (52) du tube d'aspiration court (45), et en ce que dans la zone de l'embouchure du tube d'aspiration court (45) est prévu, dans le récipient collecteur à résonance (46), un papillon, pouvant tourner autour d'un axe s'étendant tant perpendiculairement par rapport au plan de la paroi de séparation (51) qu'également perpendiculairement par rapport à l'axe longitudinal médian (52) du tube d'aspiration court (45), papillon relié à un demi-disque (54), situé sensiblement dans le plan de la paroi de séparation (51), dont le contour extérieur en forme de demi-cercle appuie sur un évidement (55) correspondant ménagé sur la face frontale de la paroi de séparation (51).

8. Dispositif monté sur un moteur à combustion interne (1), pour mettre en oeuvre le procédé selon la revendication 1, avec au moins deux tubes à résonance longs (77, 78), dont chacun débouche dans l'un de deux volumes collecteurs partiels (79, 80) d'un récipient collecteur à résonance, susceptibles d'être isolés l'un de l'autre par l'intermédiaire d'un élément obturateur (81, 82), pouvant être commandé en fonction de la vitesse de rotation, caractérisé en ce que la conduite d'aspiration (74) est passée par un récipient collecteur à résonance (75), pouvant être subdivisé en deux volumes collecteurs partiels (79, 80), en ce que dans la paroi de la conduite d'aspiration (74) sont disposés deux papillons (81, 82) qui, lors de leur passage en position d'ouverture, établissent une liaison entre les deux volumes collecteurs partiels (79, 80), en ce qu'en aval de ces papillons (81, 82), la section transversale de la conduite d'aspiration (74) peut être commandée par un autre papillon (83), et en ce qu'en aval de l'autre papillon (83), la conduite d'aspiration (74) est ramifiée en deux tubes de résonance longs (77, 78), dont l'un (77) est raccordé à un premier volume collecteur partiel (79) et l'autre (78) à l'autre volume collecteur partiel (80).
